# EUROPÄISCHE PATENTSCHRIFT

(11) **EP 2 117 754 B1**
(45) Veröffentlichungstag und Bekanntmachung des Hinweises auf die Patenterteilung: **15.09.2010**
(21) Anmeldenummer: 08706790.6
(22) Anmeldetag: 17.01.2008
(51) Int. Cl.: B23D 37/22, B23Q 1/58

(54) **MASCHINE ZUM RÄUMEN VON ZYLINDERKERNEN FÜR SCHLIESSZYLINDER**
MACHINE FOR BROACHING CYLINDER CORES FOR CYLINDER LOCKS
MACHINE POUR BROCHER DES NOYAUX DE CYLINDRES DE SERRURE

(30) Priorität: 13.02.2007 DE 102007007705
(43) Veröffentlichungstag der Anmeldung: 18.11.2009
(73) Patentinhaber: ASSA ABLOY Sicherheitstechnik GmbH, 72458 Albstadt (DE)
(72) Erfinder: CAMPLAIR, Guido, 12105 Berlin (DE); FISCHER, Ulrich, 15366 Hönow (DE)
(74) Vertreter: Meissner, Peter E.
(86) Internationale Anmeldenummer: PCT/DE2008/000122
(87) Internationale Veröffentlichungsnummer: WO 2008/098542

(56) Entgegenhaltungen:
- EP-A- 1 004 382
- DE-A1- 4 342 815

## Beschreibung

Die Erfindung betrifft eine Maschine zum Räumen von Zylinderkernen für Schließzylinder, bei der Räummesser vorgesehen sind, die aus Segmenten zusammengesetzt sind, wobei diese aus Profilsätzen bestehen mit Grundprofil und Unterprofilen und auf einem Maschinengestell vertikal übereinander angeordnet sind, sowie einer Werkstückaufnahme, die in einer waagerechten Räumbahnebene an den Räummessern vorbei bewegbar ist.

Aus der DE 43 42 815 C2 ist eine Vorrichtung zum Räumen des Profils in Schlosskernen für Zylinderschlösser mit mindestens einer vertikal und gestellfest an dem Maschinenkörper angeordneten Räumwerkzeugbahn sowie einem an dem Maschinenkörper geführten Werkzeugschlitten bekannt, der parallel zur Räumwerkzeugbahn, also ebenfalls vertikal, verfahrbar ist. Hierbei sind Räumwerkzeugmagazine zur Aufnahme einer Vielzahl von Räumwerkzeugen vorgesehen, die innerhalb der Magazine mittels Ketten oder Zahnriemen in ihre Arbeitsposition bringbar sind.
Bei dieser Vorrichtung ist die Laufbahn des Werkstückschlittens unverändert und es werden nur in die Laufbahn die verschiedenen Räumwerkzeuge eingebracht. Diese Einbringung der Räumwerkzeuge erfolgt durch senkrecht zur Räumbahn angeordnete Magazine, in denen sich einzelne Räumwerkzeuge befinden.

Aus der Praxis ist eine Räummaschine bekannt, bei der die Räumbahnebene horizontal verläuft. Im ersten Abschnitt sind die Räummesser für die Grundprofile senkrecht übereinander angeordnet und können in die ortsfest bleibende Räumbahnebene gefahren werden. In einem zweiten, in Räumrichtung sich an den ersten Abschnitt anschließenden, Abschnitt sind die Räummesser für die Unterprofile ebenfalls vertikal übereinander und auch in die Räumbahnebene verschiebbar angeordnet.
Aufwendig ist bei dieser Räummaschine, dass nicht nur das jeweils benötigte Räummesser für das Grundprofil, sondern auch die Räummesser für die Unterprofile einsortierend in die Räumbahnebene verschoben werden müssen.

Bei einer Räummaschine für den Schloßkern von Zylinderschlössern gemäß der EP 1 004 382 A1, sind die Profilsätze orthogonal zur Bewegungsrichtung des Werkstückträgers verfahrbar und positionierbar.

Für die Schlüsselkanal-Räumung von Zylinderkernen für Schließzylinder mit Stiftzuhaltung werden Schlüsselkanäle mit unterschiedlichen Merkmalskombinationen innerhalb eines Profilsatzes einerseits und verschiedener Profilsätze andererseits durch Räumtechnologie erzeugt.. Die Anzahl der Variationen der Merkmale innerhalb eines Profilsatzes kann 100 verschiedene Kombinationen überschreiten. Es gibt auch eine nicht unbeträchtliche Anzahl von Profilsätzen, die nicht miteinander kompatibel sind.

Zur Fertigung/Räumung von Zylinderkernen ist eine hohe Zahl von verschiedenen Räummessern (Räumwerkzeugen) erforderlich. Um diese Zahl zu reduzieren und aus herstellungstechnischen Gründen, werden Räummesser aus einzelnen Segmenten zusammengestellt. Diese können innerhalb eines Profilsatzes, je nach geforderten Einzelprofilen/ Unterprofilen, im Räummesserhalter variiert werden, durch Austausch oder Bereitstellung verschiedener Zusammenstellungen. Zur rationellen Fertigung sind Räumautomaten bekannt, wobei - beispielsweise bei dem vorstehend beschriebenen, aus der Praxis bekannten, Maschine die Zusammenstellung der jeweiligen Segmente innerhalb eines Profilsatzes automatisch vorgenommen werden kann, und zwar sowohl innerhalb eines Profilsatzes als auch den Wechsel zu verschieden - miteinander nicht kompatiblen Profilsätzen. Hierzu werden üblicherweise Magazine mit der Anordnung aller verfügbaren Räummessersegmente eingesetzt. Die für eine Räumung jeweils benötigten Räumsegmente werden automatisch zueinander derart in Position gefahren (z.B. mit Schrittmotoren) dass sie miteinander fluchten und ein vollständiges Räummesser bilden. Für die Räumung eines anderen Profils werden die Räumsegmente erneut zusammengestellt und der Räumvorgang wiederholt sich.

Die beschriebenen Verfahren sind somit einerseits aufwendig hinsichtlich des Maschinenaufwandes und der Rüstzeit - auch beim automatischen Werkzeugwechsel - andererseits. Dies insbesondere dadurch, dass bei den Räumautomaten lange Verfahrwege existieren und zwar umso länger, je größer die Anzahl verschiedener Profilsätze ist. Letzteres geht in die Taktzeit und damit in die Herstellungskosten direkt ein. Des Weiteren ist eine exakte Positionierung der Räummesser bzw. - segmente erforderlich, was technologisch aufwendig ist. Weiterhin sind herkömmliche Räumautomaten Sondermaschinen, die in geringen Stückzahlen und damit teuer gefertigt werden.

Aufgabe der Erfindung ist es daher eine Räummaschine bereitzustellen, bei der der Wechsel der Räummesser für die jeweilige Profilerstellung einfacher und schneller erfolgen kann.

Gelöst wird diese Aufgabe erfindungsgemäß mit einer Maschine zum Räumen von Zylinderkernen für Schließzylinder,
bei der Räummesser vorgesehen sind, die aus Segmenten zusammengesetzt sind, wobei diese aus Profilsätzen bestehen mit Grundprofil und Unterprofilen und auf einem Maschinengestell vertikal übereinander angeordnet sind, sowie einer Werkstückaufnahme, die in einer waagerechten Räumbahnebene an den Räummessern vorbei bewegbar ist, bei der die Anordnung der Grundprofile ortsfest ist, die einem Grundprofil zugeordneten oder zuordenbaren Unterprofile vertikal positionierbar dem Grundprofil nachgeordnet sind und bei der die Werkstückaufnahme vertikal in die durch jeweils ein Grundprofil vorgegebene horizontale Räumbahnebene verfahrbar ist.

Die Unterprofile sind vertikal übereinander und horizontal nebeneinander angeordnet und mit minimalem Bewegungsweg in die oder aus der Räumbahnebene verschiebbar.

Dabei können die Unterprofile durch eine vertikale Verschiebung oder durch ein horizontales Ausrücken in bzw. aus der Räumbahnebene bringbar sein.

Vorzugsweise sind die Unterprofile in Magazinplatten angeordnet, wobei jede Magazinplatte vertikal übereinander mehrere Unterprofilsegmente aufweisen kann und mehrere Magazinplatten nebeneinander angeordnet sind.

Gegenüber dem eingangs erwähnten Stand der Technik weist die erfindungsgemäße Lösung eine Reihe von Vorteilen auf.
Die feststehende Aufnahme für die Grundprofile ist statisch und konstruktiv einfacher und das Verfahren des Werkzeugträgers kann wesentlich einfacher und schneller erfolgen.

Das herzustellende Profil für einen Zylinderkern setzt sich aus einem Grundprofil und einer Anzahl von Unterprofilen zusammen, wobei bei den einzelnen Unterprofilen die Anwesenheit oder die Abwesenheit zu berücksichtigen ist.
Hinzu kommt, dass die Unterprofile den jeweiligen Grundprofilen zugeordnet sind, und zwar in der Räumbahnebene, so dass alle zu einem Grundprofil gehörenden Unterprofil- Räum - Messer - Segmente mit dem zugehörigen Grundprofilräummesser fluchten.

Durch die erfindungsgemäß vorgesehen Anordnung der Grundprofile ortsfest und der Unterprofile auf den verschiebbaren Magazinen und unter Berücksichtigung des vorstehenden Merkmals, dass nur ein entweder /oder für das Unterprofil gilt, können die Verfahrwege zum Einstellen des Unterprofils in die bzw. aus der Räumbahnebene sehr klein gewählt werde, so dass nur minimale Massen zu bewegen sind. Damit wird aber auch die gesamte Positionierung und Fixierung wesentlich vereinfacht.

Damit ergeben sich folgende Vorteile auf einen Blick
- Kleinere Verfahrwege, dadurch schneller, kleinere Antriebe erforderlich
- Positionierung unkritisch, weil gegen Anschläge gefahren wird, um Räumsegment außer Eingriff zu bringen. Deshalb Positioniereinrichtung preiswert und robust (Anschläge).
- Kostengünstige Maschine, weil Grundmaschine Standard ist

Die Erfindung soll nachfolgend unter Bezug auf die Zeichnungen kurz erläutert werden.

Dabei zeigt
Fig. 1 die Anordnung und Bewegbarkeit der Aufnahmen für die Grundprofile und der Unterprofile sowie für die Werkstückaufnahme und
Fig. 2 im Vergleich dazu die Situation bei einer herkömmlichen Maschine

Im Einzelnen ist in beiden Figuren das Magazin für die Grundprofile mit 1, das Magazin für die Unterprofile mit 2 und die Werkstückaufnahme mit 3 bezeichnet.

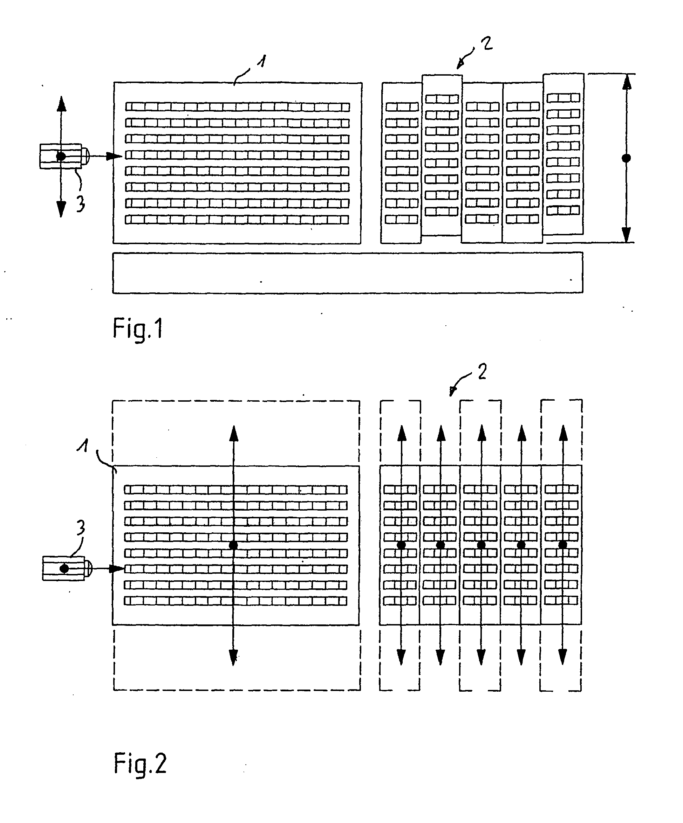

Zunächst sei unter Bezug auf die Figur 2 das herkömmliche Räumen beschrieben.

Das Magazin für die Grundprofile 1 ist im Maschinengestell vertikal verschiebbar angeordnet, während die Werstückaufnahme 3 lediglich in horizontaler Richtung verschiebbar ist. Zum Räumen eines Zylinderkernes wird somit erst das notwendige Grundprofil vertikal vor die Ruheposition der Werstückaufnahme verschoben.

Wie vorher ausgeführt, sind jedem Grundprofil Unterprofile zugeordnet. Im dargestellten Ausführungsbeispiel sind fünf Unterprofile in dem Magazin angedeutet, die vertikal verschiebbar in dem hierfür vorgesehenen Maschinengestell verschiebbar sind. Durch entsprechende vertikale Verschiebung werden dem ausgewählten Grundprofil die gewünschten Unterprofile zugeordnet, d. h. in einer horizontalen Ebene mit dem Grundprofil ausgerichtet. Je nachdem wo das benötigte Unterprofil im Magazin angeordnet ist, können hierzu unterschiedliche Verschiebewege erforderlich sein. Entsprechend aufwendig ist somit die Vorbereitung für den jeweiligen Räumvorgang.

Wesentlich schneller und einfacher ist dagegen die erfindungsgemäße Lösung zu handhaben.

Hierbei ist das Magazin für die Grundprofile 1 ortsfest, d. h. weder horizontal noch vertikal beweglich.
Demgegenüber ist die Werkstückaufnahme 3 sowohl horizontal entlang der Grundprofile bewegbar wie auch vertikal zu den Grundprofilen ausrichtbar.
Es wird also die Werkstückaufnahme 3 vertikal auf das gewünschte Grundprofil ausgerichtet.

Im nachgeschalteten Magazin für die Unterprofile 2 sind wiederum fünf Magazine nebeneinander beispielhaft angeordnet.
Wesentlich ist nun, dass die einzelnen Räummesser in den nebeneinander angeordneten Magazinen, direkt dem jeweiligen Grundprofil zugeordnet sind, d. h. zu einem bestimmten Grundprofil gehören beispielsweise fünf Unterprofile. Entschieden wird nur noch, ob das einzelne Unterprofil vorhanden sein soll oder nicht.
Betrachtet man die Figur 1, so ist dargestellt, dass dem Grundprofil, auf das der Bewegungspfeil der Werkstückaufnahme 3 zeigt, in einer Ebene - der Räumbahnebene - die Unterprofile in dem ersten, dritten und vierten Magazin folgen. Die Unterprofile im zweiten und fünften Magazin werden nicht benötigt und sind daher um einen halben Schritt aus der Räumbahnebene verschoben. Somit ist - verglichen mit der Arbeitsweise nach Figur 2 - nur eine sehr kleine Verschiebung der Magazine notwendig, so dass der Gesamtablauf für die Einstellung und Ausrichtung wesentlich einfacher und schneller durchzuführen ist.

## Patentansprüche

1. Maschine zum Räumen von Zylinderkernen für Schließzylinder,
bei der Räummesser vorgesehen sind, die aus Segmenten zusammengesetzt sind, wobei diese aus Profilsätzen bestehen mit Grundprofil (1) und Unterprofilen (2) die auf einem Maschinengestell vertikal übereinander angeordnet sind, sowie einer Werkstückaufnahme (3) , die in einer waagerechten Räumbahnebene an den Räummessern vorbei bewegbar ist, **dadurch gekennzeichnet,**
**dass** die Anordnung der Grundprofile (1) ortsfest ist,
**dass** die einem Grundprofil (1) zugeordneten oder zuordenbaren Unterprofile (2) vertikal positionierbar dem Grundprofil nachgeordnet sind und
**dass** die Werkstückaufnahme (3) vertikal in die durch jeweils ein Grundprofil vorgegebene horizontale Räumbahnebene verfahrbar ist.

2. Maschine nach Anspruch 1,
**dadurch gekennzeichnet,**
**dass** jedem Grundprofil (1) bestimmte Unterprofile (2) in der Räumbahnebene zugeordnet sind und die Auswahl der davon benötigten Unterprofile (2) durch Bewegung der nicht benötigten Unterprofile aus der Räumbahnebene erfolgt.

3. Maschine nach Anspruch 1 und 2,
**dadurch gekennzeichnet,**
**dass** die Unterprofile (2) vertikal übereinander und horizontal nebeneinander angeordnet sind.

4. Maschine nach einem der vorstehenden Ansprüche,
**dadurch gekennzeichnet,**
**dass** die Unterprofile (2) mit minimalem Bewegungsweg in die oder aus der Räumbahnebene verschiebbar sind.

5. Maschine nach Anspruch 3,
**dadurch gekennzeichnet,**
**dass** die Unterprofile (2) durch eine vertikale Verschiebung oder durch ein horizontales Ausrücken in und aus der Räumbahnebene bringbar sind.

6. Maschine nach einem der vorstehenden Ansprüche,
**dadurch gekennzeichnet,**
**dass** die Unterprofile in Magazinplatten angeordnet sind.

7. Maschine nach Anspruch 6,
**dadurch gekennzeichnet,**
**dass** jede Magazinplatte vertikal übereinander mehrere Unterprofilsegmente aufweist und dass mehrere Magazinplatten nebeneinander angeordnet sind.

8. Maschine nach Anspruch 7,
**dadurch gekennzeichnet,**
**dass** die Magazinplatten unabhängig von einander, vertikal in zwei Positionen verschiebbar sind.

9. Maschine nach Anspruch 8,
**dadurch gekennzeichnet,**
**dass** die Magazinplatten um den halben Abstand von zwei auf derselben Magazinplatte benachbarten Unterprofilsegmenten vertikal verschiebbar sind.

## Claims

1. A machine for broaching cylinder cores for cylinder locks,
in which broaching blades are provided which are composed of segments, these consisting of profile sets with basic profile (1) and sub-profiles (2) which are arranged vertically one above another on a machine frame, and also a workpiece holder (3) which can be moved past the broaching blades in a horizontal broaching track plane, **characterised in that**
the arrangement of the basic profiles (1) is stationary,
the sub-profiles (2) which are or can be associated with a basic profile (1) are arranged in vertically positionable manner following the basic profile and
**in that** the workpiece holder (3) is vertically movable into the horizontal broaching track plane predetermined by one basic profile in each case.

2. A machine according to Claim 1, **characterised in that** certain sub-profiles (2) are associated with each basic profile (1) in the broaching track plane and the selection of the sub-profiles (2) required thereby takes place by moving the non-required sub-profiles out of the broaching track plane.

3. A machine according to Claims 1 and 2, **characterised in that** the sub-profiles (2) are arranged vertically one above another and horizontally next to one another.

4. A machine according to one of the preceding claims, **characterised in that** the sub-profiles (2) are displaceable into or out of the broaching track plane with a minimum path of movement.

5. A machine according to Claim 3, **characterised in that** the sub-profiles (2) can be brought into and out of the broaching track plane by vertical displacement or by horizontal disengagement.

6. A machine according to one of the preceding claims, **characterised in that** the sub-profiles are arranged in magazine plates.

7. A machine according to Claim 6, **characterised in that** each magazine plate has a plurality of sub-profile segments arranged vertically one above another and that a plurality of magazine plates are arranged next to one another.

8. A machine according to Claim 7, **characterised in that** the magazine plates, independently of one another, are displaceable vertically into two positions.

9. A machine according to Claim 8, **characterised in that** the magazine plates are vertically displaceable by half the distance between two sub-profile segments which are adjacent on the same magazine plate.

## Revendications

1. Machine pour brocher des noyaux de cylindres pour des cylindres de fermeture,
dans laquelle il est prévu des lames de brochage qui sont composées de segments, ceux-ci étant constitués de jeux de profilés avec un profilé de base (1) et des sous-profilés (2) qui sont superposés verticalement sur un bâti de machine, ainsi qu'une fixation de pièce (3), qui peut être déplacée dans un plan horizontal de la bande de brochage en passant par les lames de brochage,
**caractérisée en ce que**
l'agencement des profilés de base (1) est fixe,
les sous-profilés (2) affectés ou affectables à un profilé de base (1) sont disposés après le profilé de base de manière verticalement positionnable, et
la fixation de pièce (3) peut être déplacée verticalement dans le plan horizontal de la bande de brochage prédéfini par un profilé de base respectif.

2. Machine selon la revendication 1,
**caractérisée en ce que**
certains sous-profilés (2) sont affectés à chaque profilé de base (1) dans le plan de la bande de brochage et le choix des sous-profilés (2) nécessaires à cet effet se fait en déplaçant les sous-profilés non nécessaires hors du plan de la bande de brochage.

3. Machine selon la revendication 1 ou 2,
**caractérisée en ce que**
les sous-profilés (2) sont superposés verticalement et disposés l'un à côté de l'autre horizontalement.

4. Machine selon l'une quelconque des revendications précédentes,
**caractérisée en ce que**
les sous-profilés (2) peuvent être déplacés avec une course de mouvement minimale dans le plan de la bande de brochage ou hors de celui-ci.

5. Machine selon la revendication 3,
**caractérisée en ce que**
les sous-profilés (2) peuvent être amenés dans le plan de la bande de brochage ou hors de celui-ci par déplacement vertical ou par dégagement horizontal.

6. Machine selon l'une quelconque des revendications précédentes,
**caractérisée en ce que**
les sous-profilés sont disposés dans des plaques magasins.

7. Machine selon la revendication 6,
**caractérisée en ce que**
chaque plaque magasin présente verticalement l'un au-dessus de l'autre plusieurs segments de sous-profilés et plusieurs plaques magasins sont disposées l'une à côté de l'autre.

8. Machine selon la revendication 7,
**caractérisée en ce que**
les plaques magasins peuvent être déplacées, indépendamment l'une de l'autre, verticalement dans deux positions.

9. Machine selon la revendication 8,
**caractérisée en ce que**
les plaques magasins peuvent être déplacées verticalement de la demi-distance de deux segments de sous-profilés adjacents sur la même plaque magasin.
